# EUROPEAN PATENT SPECIFICATION

(11) **EP 3 465 053 B1**
(45) Date of publication and mention of the grant of the patent: **13.09.2023**
(21) Application number: 17735225.9
(22) Date of filing: 01.06.2017
(51) Int. Cl.: F28D 20/02, F28F 1/12

(54) **HEAT EXCHANGER DEVICE COMPRISING A PHASE-CHANGE MATERIAL**
WÄRMETAUSCHERVORRICHTUNG MIT EINEM PHASENÜBERGANGSMATERIAL
DISPOSITIF ÉCHANGEUR DE CHALEUR COMPRENANT UN MATÉRIAU À CHANGEMENT DE PHASE

(30) Priority: 01.06.2016 PT 2016109420; 18.11.2016 EP 16199704
(43) Date of publication of application: 10.04.2019
(73) Proprietor: Edge Innovation Aveiro, Unipessoal Lda, 3810-108 Aveiro (PT)
(72) Inventor: DE JESUS TEIXEIRA, Rui Pedro, 3670-058 Campia (PT)
(74) Representative: Patentree
(86) International application number: PCT/IB2017/053255
(87) International publication number: WO 2017/208196

(56) References cited:
- EP-A1- 1 610 082
- EP-A1- 2 439 821
- AT-A4- 508 156
- CA-A1- 2 748 632
- DE-A1-102010 060 717
- FR-A1- 2 831 949
- JP-A- H01 163 597
- US-A- 2 400 737
- US-A- 5 239 839

## Description

### Technical field

The present invention relates to heat exchanger devices, in particular heat exchanger devices comprising a phase-change material, PCM.

### Background

In the heat transfer process between two points using an operating fluid that recovered heat in one point (point A) and release this heat in a second point (point B), the global efficiency depends strongly in the temperature differential between the operating fluid and each of these points. In non-linear system, where the need and availability of heat are inconstant and unpredictable, the efficiency is strongly influenced by the thermal differential between each heat exchanger and the temperature of the fluid that is entering. The overall heat coefficient is directly related to the temperature differential and therefore if this differential decreases the thermal capacity will also decrease.

In the case that heat is transferred constantly from a point A to a point B and this point B is storing this heat as sensible heat, and therefore increasing its temperature, the temperature of the operating fluid will increase after passing in the point B as result of the temperature differential decrease between operating fluid and the point B. The higher temperature of the operating fluid flowing to point A will cause a heat transfer decrease in the point A and therefore the overall thermal capacity of the system will decrease.

In heat transfer processes demanding constant temperature of the fluid that flows through the heat storage point it is fundamental to ensure that the heat capacity remains constant in the storage point so that the temperature differential at these points remains constant for most of the capacity of the heat storage. In order to do that, the storage has to be made through latent heat to ensure that the outlet temperature does not change even when the storage point loses some energy.

Document US20140102662A1 discloses a thermal battery having an insulated tank with densely packed plastic tubes filled with a phase-change material with diffusers between the PCM plastic tubes and the heat transfer fluid. Disadvantageously, the thermal battery has limited thermal power capacity and it is unable to keep this power capacity constant as the melting/solidification process occurs in the surrounds of the plastic tubes at the same time limited by the low heat conductivity of the PCM material.

Document WO 2007042621 A1 discloses a PCM heat exchanger applicable to heat transfer between air, other gases and liquids, which claims a wide range of applications. Disadvantageously, this method does not ensure a constant outlet temperature influenced by the reduction of the power capacity over time.

Document WO2014059163A1 discloses a modular thermal battery based on PCM energy storage. Disadvantageously, the heat storage capacity is limited for a given volume of the heat exchanger considering the limitation of the different materials and techniques disclosed. The plastic tubes will be a great limitation for the power capacity of the heat exchanger.

The method itself disclosed in WO2014059163A1 is a limitation to the thermal capacity as the solution is based on the phenomena of buoyancy of ice/PCM on water that is a slow process. The temperature range of this application is also very limited; in order to provide faster buoyancy phenomena the temperature differential between the ice/PCM and the operating fluid should be high. Document EP 1 610 082 A1 discloses a heat exchanger device according to the preamble of claim 1.

These facts are disclosed in order to illustrate the technical problem addressed by the present invention.

### General Description

The invention overcomes the disadvantages of the prior art by combining the high thermal capacity of a heat exchanger with the low thermal conductivity of phase change materials, PCM.

The PCM is placed in specific zones or cells of the exchanger and the solidification and melting occurs in sequence, concentrating the phase changing of the material in a single part of the whole heat exchanger, wherein the role of said part is successively taken over by a part of the exchanger next in sequence.

This part concentrates the heat transfer through a quick phase changing of the PCM. This technique results in a constant heat capacity of the heat exchanger with a consequent constant outlet temperature. The heating zone moves then throughout the heat exchanger concentrating the phase changing in a segment of the heat exchanger. Part in this context means a portion, division, fraction of the exchanger, in particular of the PCM.

The process of phase changing is fully passive and the length of the segment that is changing phase is determined by the thermal capacity of the heat exchanger and the conditions of the operating fluid flow, as well as by the structural aspects of the device. The device characteristics are dependable on the operating fluids flow conditions although, if the conditions are changed within a certain range, the device capacity adjusts and the temperature outlet remains constant.

To keep the outlet temperature constant, the process of latent heat transfer occurs only in a segment of the heat exchanger. In order to keep the capacity constant, the melting/solidification zone is then moving so that the process of heat release/absorption occurs in a given segment of the exchanger at a given time. This phenomenon occurs when the operating fluid is releasing heat to the PCM and also when the PCM is releasing the absorbed heat to the operating fluid. The period that it takes for the zone to move until the end of the exchanger correspond to the time that the exchanger is able to supply heat at constant rate.

In applications like domestic hot water circuits, the stagnation temperature of the water in the pipes decreases if hot water is not used continuously in the consuming point. If the building does not have recirculating circuits to ensure a constant flow of hot water through the pipes, the hot water will be delivered with great delay in the consuming point and the water will be wasted during this waiting period when cold water is drained from the distribution pipes of hot water.

The heat transfer fluid can be a liquid like water or a gas like air, or other usual fluids used in heat exchanger devices.

In an illustrative embodiment, the disclosed heat storage device stores latent heat in the delivery point of hot water absorbed during the shower from the hot water stream. The stored heat will then be used in the next utilization to heat the cold water stagnated in the distribution pipes, increasing the water and energy efficiency of the building.

In an illustrative embodiment, the disclosed heat exchanger device is able to heat a water flow of 8 litres per minute from 15ºC to 40ºC during 60 seconds, keeping the temperature stabilized within 1-2ºC, with a thermal capacity of approximately 14kW. This illustrative embodiment is able to correct the response time of a consumption point during 60 seconds.

In an illustrative embodiment, the devices can be combined to optimize a network of delivery points in a building or system.

In an illustrative embodiment, the device can be applied to solar thermal system in locations with long periods of low solar irradiations in order to keep the storage temperature low and constant during the heat exchange process between the solar panel and the domestic hot water storage, increasing the utilization of this renewable source of energy.

In an illustrative embodiment, an insulated tank contains a heat exchanger composed by pipes and fins with a PCM placed in specific zones or cells, and one or more operating fluids that are flowing within the heat exchanger. The PCM stores energy as latent heat and when the phase changes from solid to liquid and reversely it releases this energy. When the phase changes from liquid to solid the PCM restore the latent heat to be used in the next utilization. This process occurs at constant temperature, therefore, if the PCM is liquid and an operating fluid with temperature below the phase change temperature of this PCM flows inside the heat exchanger the PCM will release heat while it is solidifying. As a consequence, it heats up the operating fluid flowing within the heat exchanger. This process can be reversed if the operating fluid temperature is higher than the temperature of the PCM phase changing. If the PCM is in the solid phase and the operating fluid temperature is higher than the PCM phase changing temperature, PCM melts while it is absorbing heat from the operating fluid and the operating fluid cools down as it flows through the heat exchanger.

In an illustrative embodiment, the heat exchanger can be composed by different channels allowing individual streams to be flowing within the heat exchanger with different flow rates or temperature ranges. Also, for non-linear systems where energy availability does not match the energy demand, the disclosed invention can ensure the best performance of the heat exchange even when the ideal conditions of demand and supply do not match.

The phase changing process concentrated in a single segment of the whole heat exchanger that moves while heat is recovered or released results in a constant heat capacity and outlet temperature of the operating fluid. The heat exchanger capacity can therefore be adjusted considering the flow of each stream of operating fluid, the temperature ranges and the temperature required in the outlet.

This disclosure can be applied for heat transfer optimization between two points when the temperature differential is relatively low. By concentrating the phase changing in a segment of the heat exchanger the device provides constant heat power capacity and constant outlet temperature during the phase changing of the PCM.

It is disclosed a heat exchanger device comprising:
a tubing comprising an inlet and an outlet, for respectively receiving and delivering a heat transfer fluid;
a phase-change material, PCM, in contact with said tubing;
a plurality of heat-exchanging fins connected to said tubing arranged to define a plurality of cells receiving the phase-change material, PCM, between adjacent said fins;
wherein the PCM is contained in said plurality of cells arranged such that the flow of the heat transfer fluid in said tubing causes each cell PCM to change phase sequentially in the direction of the inlet to the outlet;
wherein the thickness of each changing phase PCM cell, the thickness being the distance between adjacent heat-exchanging fins, is sufficiently thin such that the the PCM in said PCM cell changes phase at the same time, whereas the PCM in said plurality of cells changes phase sequentially in the direction of the inlet to the outlet.

It is disclosed a heat exchanger device comprising:
a tubing comprising an inlet and an outlet, for respectively receiving and delivering a heat transfer fluid;
a phase-change material, PCM, in contact with said tubing;
wherein the PCM material is arranged such that the flow of the heat transfer fluid in said tubing causes the PCM to change phase, wherein said PCM phase changing is limited to a part of the heat exchanger device, wherein said part moves gradually in the direction of the inlet to the outlet.

The PCM may be contained in a plurality of cells such that the flow of the heat transfer fluid in said tubing causes each cell PCM to change phase sequentially in the direction of the inlet to the outlet.

The cells may be closed cells. The cells may be encapsulated PCM capsules and the encapsulated PCM cells may be contained within the heat transfer tubing.

The cells may be open cells and the exchanger may comprise an external tank for containing the PCM. Said tank may be thermally insulated.

The PCM cells may be stacked in one or more rows.

The heat exchanger comprises a plurality of fins connected to said tubing arranged to define a plurality of cells receiving the phase-change material, PCM, between adjacent said fins.

It is disclosed a heat exchanger comprising:
a tubing for receiving and delivering a heat transfer fluid;
a phase-change material, PCM, encompassing said tubing;
a plurality of fins connected to said tubing arranged to define a plurality of cells receiving the phase-change material, PCM, such that the flow of the heat transfer fluid in said tubing causes each cell PCM to change phase sequentially when the heat transfer fluid has a PCM phase-changing temperature.

An embodiment comprises an inlet for receiving the heat transfer fluid to said tubing and an outlet for delivering the heat transfer fluid from said tubing.

In an embodiment, said fins are connected to, and extend from, said tubing.

In an embodiment, the fin thickness tapers away from the tubing.

According to the invention, the cell thickness tapers away from the tubing.

In an embodiment, each fin transversal profile is curved or bent towards an adjacent fin as each fin extends from the tubing.

An embodiment comprises a second tubing for receiving and delivering a second heat transfer fluid, wherein the second tubing is connected to the PCM cells, such that heat is transferred between the first tubing and the second tubing as each cell PCM changes phase sequentially.

An embodiment comprises a second tubing for receiving and delivering a second heat transfer fluid, wherein the second tubing is connected to the fins of the first tubing, such that heat is transferred between the first tubing and the second tubing as each cell PCM changes phase sequentially.

In an embodiment, the PCM cells are stacked in one or more rows.

In an embodiment, the tubing is 'S'-shaped going through stacked rows of PCM cells.

In an embodiment, the PCM is an organic material.

In an embodiment, the PCM is an inorganic material.

In an embodiment, the PCM is a eutectic material.

An embodiment comprises a hot water distribution point coupled to the heat exchanger.

For example, the hot water distribution point is an electric water heater or a gas water heater.

The described heat exchanger can be installed close the water consumption point or as well as in a defined point of the domestic hot water distribution system in in order to compensate the hot water demand in several consumption points. Therefore, an optimized network can be established considering the heating system position, the energy demand of each consumption point and the location of these consumption points, by placing heat exchangers in the network with the adequate heat storage capacity and placement.

When several heat exchangers are used between the heating system and the consumption point, those devices are designed to have a reduced pressure loss in the circuit. Thus, in this case, specific heat exchanger geometries may be considered based in plate heat exchangers or other heat exchangers with macro-capsulated PCM.

### Brief Description of the Drawings

The following figures provide preferred embodiments for illustrating the description and should not be seen as limiting the scope of invention.
**Figure 1****:** Schematic representation of an embodiment of the device (cut view) with insulated tank, heat exchanger fins and tubing, and a PCM bath in open cells zones.
**Figure 2****:** Schematic representation of an embodiment of different PCM zones, showing the PCM melting or solidifying depending on the temperature of the inlet operating fluid and the PCM phase change temperature. PCM phase changing is occurring in a segment of the exchanger resulting in a constant temperature outlet and constant heat transfer.
**Figure 3****:** Schematic representation of embodiments with different possible fin geometries.
**Figure 4****:** Schematic representation of the fins showing the variation of fin thickness and the variation of the PCM layer thickness between fins.
**Figure 5****:** Schematic representation of a domestic hot water distribution network in a building with centralized heating system and temperature correction devices installed in specific points to passively correct the response time of the hot water in each consumption point.
**Figure 6****:** Schematic representation of embodiments with different possible heat exchanger concepts based in macro-encapsulated PCM.
**Figure 7****:** Schematic representation of embodiments with different possible heat exchanger concepts based in plates disposed in parallel.

### Detailed Description

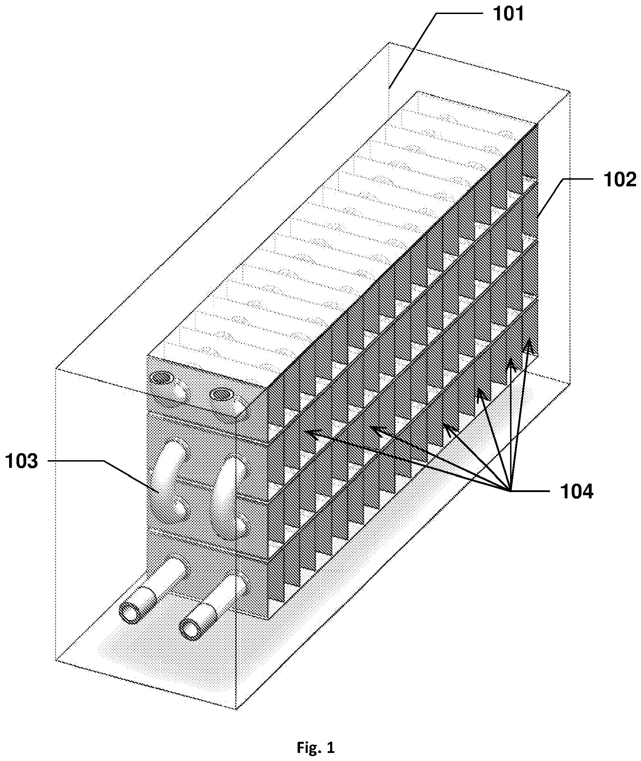

**Fig. 1** shows a schematic representation of an embodiment of the device (cut view) with insulated tank **101,** heat exchanger fins **102** and tubing **103,** and a PCM bath in open cells zones **104.**

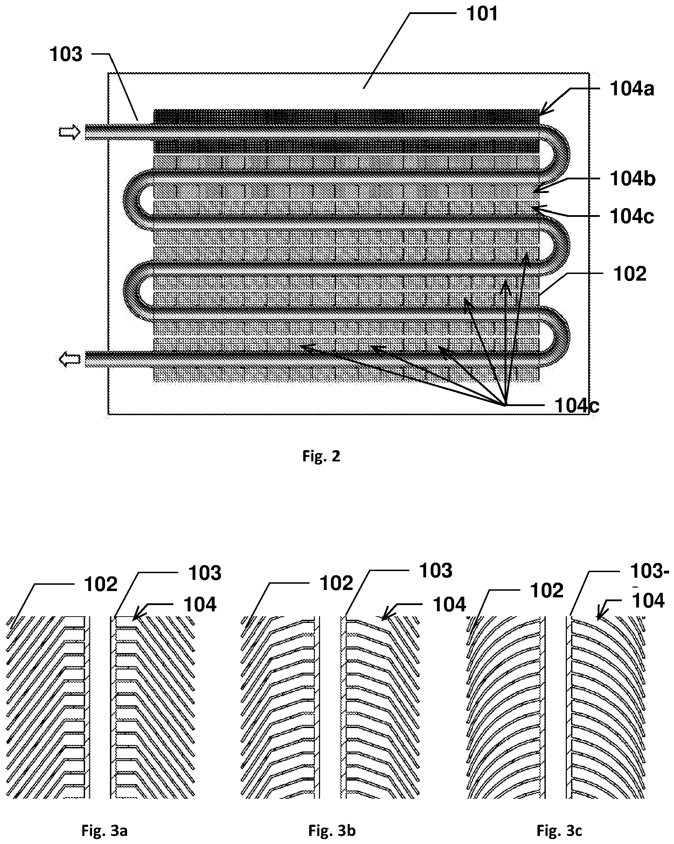

**Fig. 2** shows a schematic representation of an embodiment of the device (schematic view) with insulated tank **101,** heat exchanger fins **102** and tubing **103,** and a PCM bath in open cells zones **104.** The different PCM zones are represented, showing the PCM melting or solidifying depending on the temperature of the inlet operating fluid and the PCM phase change temperature. PCM phase changing is occurring in a segment of the exchanger resulting in a constant temperature outlet and constant heat transfer.

A part of the PCM zones **104a** have already changed phase, another part of the PCM zones **104b** are changing phase, and finally another part of the PCM zones **104c** have not yet changed phase.

**Fig. 3** shows a schematic representation of embodiments with different possible fin geometries.

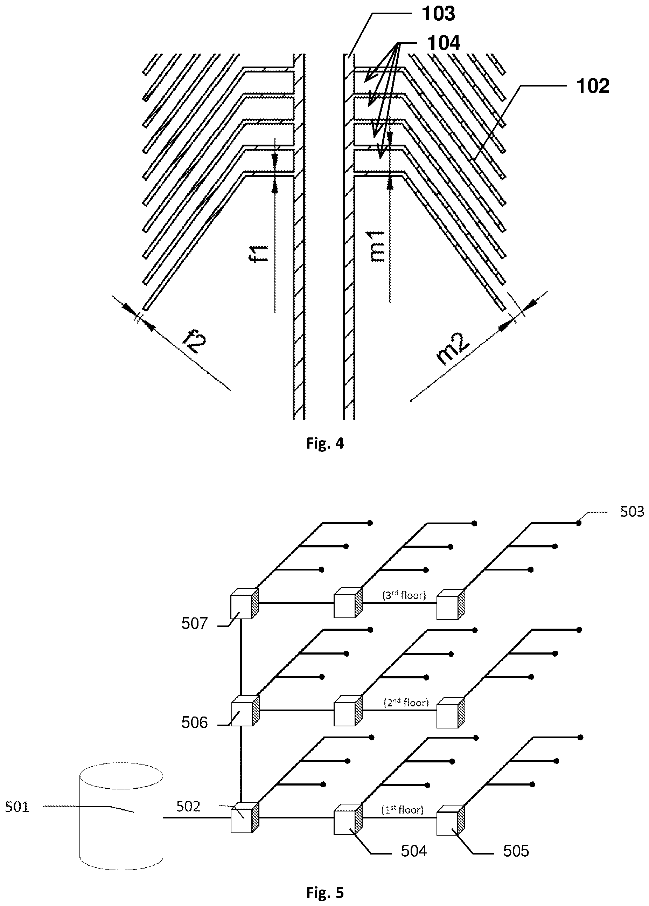

**Fig. 4** shows a schematic representation of the fins showing the variation of fin thickness and the variation of the PCM layer thickness between fins. The detailed representation of the fins shows specifically (i) the variation of the fin thickness (f1, f2) and (ii) the variation of the PCM layer thickness between fins (m1, m2).

**Fig. 5** shows a schematic representation of a building's domestic hot water distribution network with centralized heating **501,** passive temperature correction devices **502, 504-507** and consumption points of domestic hot water **503.** The temperature correction devices are based in the disclosed heat exchanger but once applied in a distribution network there are additional concerns, like the pressure loss, that must be addressed as is well known in the art by specifying adequate pipe sizes and flows. The network optimization based in the consumption profiles in each consumption point and the location and capacity of each temperature correction devices results in a simplified network that responds equally to the specific needs of the building.

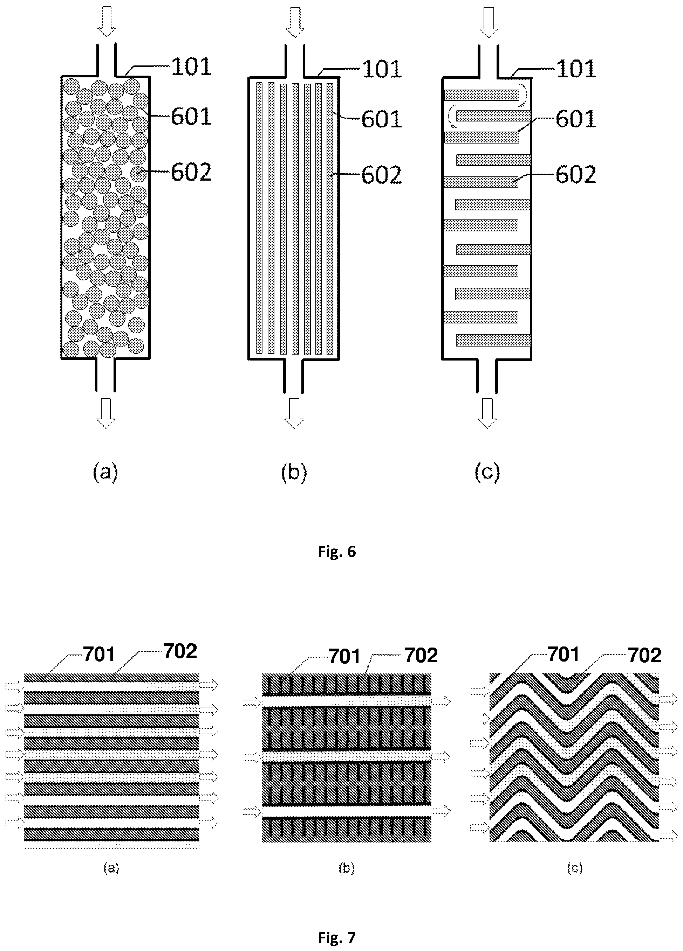

**Fig. 6** shows a schematic representation of examples not within the scope of the invention, showing different possible heat exchanger (Fig. 6a, 6b, 6c) concepts based in encapsulated PCM **602** where the PCM is constrain within a container or capsule **601.** The detailed representation of the encapsulated PCM shows specifically (a) tubes or spheres for encapsulation of the PCM for interstitial flow of the operating fluid (b) parallel plates with encapsulated PCM for parallel flow of the operating fluid and (c) parallel plates with encapsulated PCM for perpendicular meandering flow of the operating fluid.

**Fig. 7** shows schematic representation of examples not within the scope of the invention, showing different possible heat exchanger concepts based in plates disposed in parallel, i.e. embodiments similar to the embodiment of Fig. 6(b) for parallel flow of the operating fluid along the PCM-containing plates where the PCM **702** is constrained between parallel plates **701** - the plates maybe optionally flat. The detailed representation of the parallel plates shows in particular (a) parallel flat plates with PCM and the operating fluid zones (b) parallel plates with fins embedded in the PCM zone or/and in the operating fluid zone for higher contact area and (c) corrugated parallel plates separating alternating PCM and operating fluid zones.

An important preferred aspect in the thermal power of the presented device is the geometry of the fins. As shown in Figure 3 and 4, several parameters may be taken into account in the design, such as: (i) the fin shape, (ii) the PCM thickness between fins and (iii) the fin thickness. The heat exchange optimization using the mentioned variables is driven by the temperature variation along the fins. Their capacity to conduct the energy from/to a PCM with low thermal conductivity, preserving the phase change concentrated a specific zone of the heat exchanger, is highly dependent on those parameters.

By having a decreasing fin thickness as the fins distance themselves from the tubing, this allows a more uniform thermal exchange for each PCM zone. This is also beneficial to the overall objective of having individual PCM zones change phase sequentially but also uniformly and as a whole for each zone.

By having a decreasing width of the PCM zone as the distance increases from the tubing, this also allows a more uniform thermal exchange for each PCM zone, also facilitating that each individual PCM zone changes phase uniformly and as a whole.

Concerning the design of the heat exchanger, and in order to ensure a constant outlet temperature and power of the heat exchanger, several parameters are accounted for. These parameters are related with (i) the interface between the operating fluid and the inner surface of the tubing, (ii) the heat conduction through the heat exchanger and (iii) the heat transfer between the heat exchanger and the PCM.

The parameters related with the interface operating fluid / surface of the tubing includes the section area and geometry of the tubing, surface roughness, flow rate and properties of the operating fluid. The turbulence of the flow is affected by these parameters and consequently the thermal convention in the inner surface of the tubing will depend on each of these parameters.

The heat conduction along the heat exchanger depends on the material and geometrical properties. The temperature distribution, in turn, affects the heat transfer between the heat exchanger and the PCM.

The geometry of the heat exchanger influences the local ratio between the PCM volume and the interface area PCM / heat exchanger and the temperature differential between the fin and the PCM decreases when moving away from the tubing. Considering that the heat transfer is directly proportional to the temperature differential less energy is transmitted to the fin in a zone away from the tube. Therefore, in zones away from the tubing a lower ratio volume of PCM / area of interface will ensure a constant heat transfer. Thus, the totality of PCM around a specific zone of the heat exchanger can change phase at the same time. The described heat exchanger design in particular intends to compensate the low conduction properties of the PCM in order to use all the latent energy stored.

In an embodiment, where the PCM material is arranged such that the flow of the heat transfer fluid in said tubing causes the PCM to change phase, wherein said PCM phase changing is limited to a part of the heat exchanger device, wherein said part moves gradually in the direction of the inlet to the outlet, the thickness of the PCM part changing phase is sufficiently thin such that the totality of the PCM in said PCM part can change phase at the same time - the thickness being the distance between adjacent heat-exchanging fins or heat-exchanging plates.

In particular, the totality of a PCM part extending between adjacent heat-exchanging fins or heat-exchanging plates can change phase at the same time.

In an illustrative embodiment, a heat exchanger with a heating power of 14 kW able to heat a water flow of 8 litters per minute from 15ºC to 40ºC consisting on a sequence of copper fins 0.3 mm thick with an individual contact area (PCM - fin) of 4.800 mm² providing a ratio volume / contact area of 1.5 mm³/mm² in zones close to the tubing and 0.6 mm³/mm² in zones with distance higher than 6 mm from the tubing centre.

In an illustrative embodiment, the disclosure heat exchanger device can be used to correct the temperature of an operating fluid in whole distribution network, see for example fig. 5. The device can be installed in delivery 503 or intermediate **502, 504-508** points providing a global correction of the different segments of the circuits benefiting from the sequential arrangement where one intermediate point can provide temperature correction for whole the downstream network.

In an embodiment, an association of devices can be used in the network to correct the temperature of several delivery points in different locations in a parallel **502, 506, 507** and / or serial arrangement **502, 504, 505,** see for example fig. 5. The capacity and power of each device is calculated according to the specifications of the network.

In an embodiment, the devices to install in intermediate points can consist in a heat exchanger incorporating encapsulated PCMs. In this embodiment, the pressure drop at this point can be reduced and therefore the delivery pressure and flow in all downstream points can be nearly constant.

The invention should not be seen in any way restricted to the embodiments described and a person with ordinary skill in the art will foresee many possibilities to modifications thereof within the scope of the claims.

The above described embodiments are combinable.

The following claims further set out particular embodiments of the disclosure.

## Claims

1. Heat exchanger device comprising:
a tubing (103) comprising an inlet and an outlet, for respectively receiving and delivering a heat transfer fluid;
a phase-change material, PCM, in contact with said tubing (103);
a plurality of heat-exchanging fins (102) connected to said tubing (103) arranged to define a plurality of cells (104) receiving the phase-change material, PCM, between adjacent said fins (102);
wherein the PCM is contained in said plurality of cells (104) arranged such that the flow of the heat transfer fluid in said tubing (103) causes each cell (104) PCM to change phase sequentially in the direction of the inlet to the outlet;
wherein the cells (104) are arranged such that PCM phase changing is limited to a part of the heat exchanger device, wherein the thickness of each changing phase PCM cell (104),
the thickness being the distance between adjacent heat-exchanging fins (102), is sufficiently thin such that the PCM in said part changes phase at the same time and wherein said part moves gradually from the inlet to the outlet, defining a part of the heat exchanger device where phase change has occurred, a part of the heat exchanger device where phase change is occurring, and a part of the heat exchanger device where phase change has not occurred;
**characterised in that** the cell thickness tapers away from the tubing (103).

2. Heat exchanger device according to the previous claim, wherein said heat-exchanging fins (102) are connected to, and extend from, said tubing (103).

3. Heat exchanger device according to any of the previous claims wherein the cells are open cells and the heat exchanger comprises an external tank (101) for containing the PCM.

4. Heat exchanger device according to any of the previous claims, wherein each heat-exchanging fin transversal profile is curved or bent towards an adjacent fin as each fin extends from the tubing (103).

5. Heat exchanger device according to any of the previous claims, wherein the PCM cells (104) are arranged as stacked rows, and the tubing (103) is 'S'-shaped going through
stacked rows of PCM cells.

6. Heat exchanger device according to any of the previous claims comprising a second tubing for respectively receiving and delivering a second heat transfer liquid, wherein the second tubing is in contact with the PCM, such that heat is transferred between the first tubing and the second tubing as the PCM changes phase gradually in the direction of the inlet to the outlet .

7. Heat exchanger device according to the previous claim, such that heat is transferred between the first tubing and the second tubing as each cell PCM changes phase sequentially.

8. Heat exchanger device according to any of the previous claims comprising a second tubing for respectively receiving and delivering a second heat transfer fluid, wherein the second tubing is connected to the fins (102) of the first tubing, such
that heat is transferred between the first tubing and the second tubing as the PCM changes phase gradually in the direction of the inlet to the outlet.

9. Heat exchanger device according to the previous claim, such that heat is transferred between the first tubing and the second tubing as each cell (104) PCM
changes phase sequentially.

10. Heat exchanger device according to any claim 6-9, wherein the PCM cells (104) are
arranged as stacked rows, and the first and second tubing are 'S'-shaped going through stacked rows of PCM cells.

11. Heat exchanger device according to any of the previous claims, wherein the fin thickness tapers away from the tubing.

12. Heat exchanger device according to any of the previous claims, wherein the PCM cells (104) are stacked in one or more rows.

13. Heat exchanger device
according to any of the previous claims comprising a hot water distribution point, in particular the hot water distribution point is an electric water heater or a gas water heater.

14. Heat exchanger system comprising two or more of the heat exchanger devices according to any of the previous claims, wherein said heat exchanger devices are coupled in parallel, are coupled in series, or are coupled in series and parallel.

## Patentansprüche

1. Wärmetauschervorrichtung umfassend:
eine Rohrleitung (103), umfassend einen Einlass und einen Auslass zur Aufnahme bzw.
Abgabe einer Wärmeträgerflüssigkeit;
ein Phasenwechselmaterial (PCM) in Kontakt mit der genannten Rohrleitung (103);
eine Vielzahl an Lamellen für den Wärmetausch (102), die mit der genannten Rohrleitung (103) verbunden und so angeordnet sind, dass sie eine Vielzahl von Zellen (104) bilden, die das Phasenwechselmaterial (PCM) zwischen den genannten benachbarten Lamellen (102) aufnehmen;
wobei das PCM in der genannten Vielzahl von Zellen (104) enthalten ist, die so angeordnet sind, dass der Fluss der Wärmeträgerflüssigkeit in der genannten Rohrleitung (103) bewirkt, dass das jede PCM-Zelle (104) nacheinander in Richtung des Einlasses zu dem Auslass hin die Phase wechselt;
wobei die Zellen (104) so angeordnet sind, dass der Phasenwechsel des PCM auf einen Teil der Wärmetauschervorrichtung beschränkt ist, wobei die Stärke jeder phasenwechselnden PCM-Zelle (104), bei der er sich um den Abstand zwischen den benachbarten Wärmetausch-Lamellen (102) handelt, ausreichend dünn ist, damit das PCM in dem genannten Teil die Phase zur selben Zeit wechselt und wobei der genannte Teil sich schrittweise von dem Einlass zum Auslass hin bewegt und einen Teil der Wärmetauschervorrichtung, in dem ein Phasenwechsel stattgefunden hat, einen Teil der Wärmetauschervorrichtung, in dem ein Phasenwechsel stattfindet, und einen Teil der Wärmetauschervorrichtung, in dem kein Phasenwechsel stattgefunden hat, definiert;
**dadurch gekennzeichnet, dass** sich die Zellstärke von der Rohrleitung (103) weg verjüngt.

2. Wärmetauschervorrichtung nach dem vorangehenden Anspruch, wobei die genannten Lamellen für den Wärmetausch (102) mit der Rohrleitung (103) verbunden sind und von diesem ausgehen.

3. Wärmetauschervorrichtung nach einem der vorangehenden Ansprüche, wobei die Zellen offene Zellen sind und der Wärmetauscher einen externen Tank (101) zur Aufnahme des PCM umfasst.

4. Wärmetauschervorrichtung nach einem der vorangehenden Ansprüche, wobei jedes Querprofil der Lamellen für den Wärmetausch zu einer benachbarten Lamelle hin gekrümmt oder gebogen ist, während jede Lamelle von der Rohrleitung (103) ausgeht.

5. Wärmetauschervorrichtung nach einem der vorangehenden Ansprüche, wobei die PCM-Zellen (104) als übereinander gestapelte Reihen angeordnet sind und die Rohrleitung (103) S-förmig durch die übereinander gestapelten Reihen der PCM-Zellen verläuft.

6. Wärmetauschervorrichtung nach einem der vorangehenden Ansprüche, umfassend eine zweite Rohrleitung zur Aufnahme bzw. Abgabe einer zweiten Wärmeträgerflüssigkeit, wobei die zweite Rohrleitung in Kontakt mit dem PCM steht, sodass Wärme zwischen der ersten Rohrleitung und der zweiten Rohrleitung übertragen wird, wenn das PCM schrittweise in Richtung des Einlasses zum Auslass hin seine Phase ändert.

7. Wärmetauschervorrichtung nach dem vorangehenden Anspruch, sodass Wärme zwischen der ersten Rohrleitung und der zweiten Rohrleitung übertragen wird, wenn jede PCM-Zell nacheinander die Phase wechselt.

8. Wärmetauschervorrichtung nach einem der vorangehenden Ansprüche, umfassend eine zweite Rohrleitung zur Aufnahme bzw. Abgabe einer zweiten Wärmeträgerflüssigkeit, wobei die zweite Rohrleitung mit den Lamellen (102) der ersten Rohrleitung verbunden ist, sodass Wärme zwischen der ersten Rohrleitung und der zweiten Rohrleitung übertragen wird, wenn das PCM schrittweise in Richtung des Einlasses zum Auslass hin seine Phase ändert.

9. Wärmetauschervorrichtung nach dem vorangehenden Anspruch, sodass Wärme zwischen der ersten Rohrleitung und der zweiten Rohrleitung übertragen wird, wenn jede PCM-Zelle (104) nacheinander die Phase wechselt.

10. Wärmetauschervorrichtung nach einem der Ansprüche 6 bis 9, wobei die PCM-Zellen (104) in übereinander gestapelten Reihen angeordnet sind und die erste und zweite Rohrleitung S-förmig durch die übereinander gestapelten Reihen mit PCM-Zellen verlaufen.

11. Wärmetauschervorrichtung nach einem der vorangehenden Ansprüche, wobei sich die Stärke der Lamellen von der Rohrleitung weg verjüngt.

12. Wärmetauschervorrichtung nach einem der vorangehenden Ansprüche, wobei die PCM-Zellen (104) in einer oder mehreren Reihen übereinander gestapelten angeordnet sind.

13. Wärmetauschervorrichtung nach einem der vorangehenden Ansprüche mit einem Warmwasserverteiler, wobei der Warmwasserverteiler insbesondere ein elektrisch oder mit Gas betriebener Warmwasserbereiter ist.

14. Wärmetauschersystem, das zwei oder mehr der Wärmetauschervorrichtungen nach einem der vorangehenden Ansprüche umfasst, wobei die Wärmetauschervorrichtungen parallel, in Reihe oder in Reihe und parallel gekoppelt sind.

## Revendications

1. Dispositif échangeur de chaleur comprenant :
un tuyau (103) comprenant une entrée et une sortie, pour recevoir et distribuer respectivement un fluide caloporteur ;
un matériau à changement de phase, PCM, en contact avec ledit tuyau (103) ;
une pluralité d'ailettes d'échange de chaleur (102) raccordées audit tuyau (103) arrangées pour définir une pluralité de cellules (104) recevant le matériau à changement de phase, PCM, entre lesdites ailettes adjacentes (102) ;
dans lequel le PCM est contenu dans ladite pluralité de cellules (104) arrangé de manière que le flux du fluide caloporteur dans ledit tuyau (103) amène le PCM de chaque cellule (104) à changer de phase séquentiellement dans la direction allant de l'entrée vers la sortie ;
dans lequel les cellules (104) sont arrangées telles que le changement de phase PCM soit limité à une partie du dispositif échangeur de chaleur, dans lequel l'épaisseur de chaque cellule de PCM échangeur de phase (104), l'épaisseur étant la distance entre les ailettes d'échange de chaleur adjacentes (102), est suffisamment fine telle que le PCM dans ladite partie change de phase en même temps et dans lequel ladite partie bouge graduellement de l'entrée vers la sortie, définissant une partie du dispositif échangeur de chaleur où le changement de phase a eu lieu, une partie du dispositif échangeur de chaleur où le changement de phase est en train d'avoir lieu, et une partie du dispositif échangeur de chaleur où le changement de phase n'a pas eu lieu ;
**caractérisé en ce que** l'épaisseur de la cellule diminue en s'éloignant du tuyau (103).

2. Dispositif échangeur de chaleur selon la revendication précédente, dans lequel lesdites ailettes d'échange de chaleur (102) sont raccordées à, et s'étendent à partir dudit tuyau (103).

3. Dispositif échangeur de chaleur selon l'une quelconque des revendications précédentes dans lequel les cellules sont des cellules ouvertes et l'échangeur de chaleur comprend un réservoir externe (101) pour contenir le PCM.

4. Dispositif échangeur de chaleur selon l'une quelconque des revendications précédentes, dans lequel chaque profil transversal d'ailette d'échange de chaleur est courbé ou plié vers une ailette adjacente lorsque chaque ailette s'étend à partir du tuyau (103).

5. Dispositif échangeur de chaleur selon l'une quelconque des revendications précédentes, dans lequel les cellules de PCM (104) sont arrangées en rangées empilées, et le tuyau (103) est en forme de « S » passant à travers les rangées empilées de cellules de PCM.

6. Dispositif échangeur de chaleur selon l'une quelconque des revendications précédentes comprenant un second tuyau pour recevoir et distribuer respectivement un second fluide caloporteur, dans lequel le second tuyau est en contact avec le PCM, tel que la chaleur soit transférée entre le premier tuyau et le second tuyau lorsque le PCM change de phase graduellement dans la direction allant de l'entrée vers la sortie.

7. Dispositif échangeur de chaleur selon la revendication précédente, tel que la chaleur soit transférée entre le premier tuyau et le second tuyau lorsque le PCM de chaque cellule change de phase séquentiellement.

8. Dispositif échangeur de chaleur selon l'une quelconque des revendications précédentes comprenant un second tuyau pour recevoir et distribuer respectivement un second fluide caloporteur, dans lequel le second tuyau est raccordé aux ailettes (102) du premier tuyau, tel que la chaleur soit transférée entre le premier tuyau et le second tuyau lorsque le PCM change graduellement de phase dans la direction allant de l'entrée vers la sortie.

9. Dispositif échangeur de chaleur selon la revendication précédente, tel que la chaleur soit transférée entre le premier tuyau et le second tuyau lorsque le PCM de chaque cellule (104) change de phase séquentiellement.

10. Dispositif échangeur de chaleur selon l'une quelconque des revendications 6-9, dans lequel les cellules de PCM (104) sont arrangées en rangées empilées, et le premier et le second tuyau sont en forme de « S » passant à travers les rangées empilées de cellules de PCM.

11. Dispositif échangeur de chaleur selon l'une quelconque des revendications précédentes, dans lequel l'épaisseur de l'ailette diminue en s'éloignant du tuyau.

12. Dispositif échangeur de chaleur selon l'une quelconque des revendications précédentes, dans lequel les cellules de PCM (104) sont empilées dans une ou plusieurs rangées.

13. Dispositif échangeur de chaleur selon l'une quelconque des revendications précédentes comprenant un point de distribution d'eau chaude, en particulier le point de distribution d'eau chaude étant un chauffe-eau électrique ou un chauffe-eau à gaz.

14. Système échangeur de chaleur comprenant deux ou plusieurs des dispositifs d'échange de chaleur selon l'une quelconque des revendications précédentes, dans lequel lesdits dispositifs d'échange de chaleur sont accouplés parallèlement, sont accouplés en série, ou sont accouplés en série et parallèlement.
